## Europäisches Patentamt

## European Patent Office

## Office européen des brevets

(19)

(11) Veröffentlichungsnummer: **0 037 074**
**B1**

(12) **EUROPÄISCHE PATENTSCHRIFT**

(45) Veröffentlichungstag der Patentschrift:
19.09.84

(51) Int. Cl.³: **H 04 L 11/00**, H 04 Q 3/54

(21) Anmeldenummer: **81102249.0**

(22) Anmeldetag: **25.03.81**

(54) Verfahren und Schaltungsanordnung zur Aufnahme und Abgabe von Informationsdaten und Signalisierungsdaten bei einer programmgesteuerten Datenvermittlungsanlage.

(30) Priorität: **28.03.80 DE 3012133**

(43) Veröffentlichungstag der Anmeldung:
**07.10.81 Patentblatt 81/40**

(45) Bekanntmachung des Hinweises auf die Patenterteilung:
**19.09.84 Patentblatt 84/38**

(84) Benannte Vertragsstaaten:
**AT IT SE**

(56) Entgegenhaltungen:
**EP - A - 0 017 035**
**DE - A - 2 833 048**

**COLLOQUE INTERNATIONAL DE COMMUTATION, 7.-11. Mai 1979, Seiten 751-756 Paris, FR. R. NAESSL et al.: "Utilisation des microordinateurs dans le système de commutation de données EDS"**
**COLLOQUE INTERNATIONAL DE COMMUTATION, 7.-11. Mai 1979, Seiten 435-440 Paris, FR. R. HAGEN: "Interfonctionnement entre réseaux différents de transmission de textes, en particulier à la frontière télétex-télex"**
**COLLOQUE INTERNATIONAL DE COMMUTATION, 7.-11. Mai 1979, Seiten 371-381 Paris, FR. HUBER et al.: "Expériences avec les systèmes à programme enregistré pour les communications de données et de**

(73) Patentinhaber: **Siemens Aktiengesellschaft, Berlin und München Wittelsbacherplatz 2, D-8000 München 2 (DE)**

(72) Erfinder: **Naessl, Robert, Dipl.-Ing., Am Hohen Weg 29, D-8081 Kottgeisering (DE)**
Erfinder: **Schaffer, Bernhard, Dipl.-Ing., Waldheimstrasse 3, D-8034 Lochham (DE)**

(56) Entgegenhaltungen: (Fortsetzung)
**textes et leur amélioration grâce à des microprocesseurs"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf eine Schaltungsanordnung gemäß dem Oberbegriff des Anspruchs 1.

Eine Schaltungsanordnung der vorstehend erwähnten Art ist bereits bekannt (DE-A1-2 833 048). Durch diese bekannte Schaltungsanordnung wird zwar eine Entlastung der mit der betreffenden Schaltungsanordnung verbundenen Datenvermittlungsanlage hinsichtlich der Bereitstellung von Verarbeitungszyklen erreicht, die sonst für die Ermittlung und Verarbeitung von Signalisierungsdaten bereitzustellen wären. Die wirksame Entlastung der Datenvermittlungsanlage setzt dabei indessen voraus, daß den einzelnen Überwachungsschaltungen stets Signalisierungsdaten ein und derselben Signalisierungsprozedur zugeführt werden. Dies ist allerdings nicht immer möglich, und zwar insbesondere in den Fällen nicht, in denen im Zuge eines Ausbaus der Vermittlungsdienste an einer derartigen Datenvermittlungsanlage Datensender/Datenempfänger angeschlossen werden, die mit unterschiedlichen Datenübertragungsraten und Signalisierungsprozeduren betrieben werden müssen.

Man könnte nun zwar Datensender/Datenempfänger ein und derselben Kategorie (beispielsweise hinsichtlich der abzuwickelnden Signalisierungsprozedur) an jeweils eine Überwachungsschaltung anschließen, die lediglich für die Erfassung von Signalisierungsdaten dieser betreffenden Signalisierungsprozedur ausgelegt wäre. Damit wäre aber die Abgabe von unterschiedlichen Signalisierungsdaten von den einzelnen Überwachungsschaltungen verbunden, was zur Folge hätte, daß in der vorgesehenen Datenvermittlungsanlage unterschiedliche Betriebsprogramme bereitzustellen wären, um die auf das Auftreten der betreffenden unterschiedlichen Meldesignale hin erforderlichen Steuerungsvorgänge abzuwickeln. Dadurch ergäbe sich wieder eine unerwünschte hohe Belastung der Datenvermittlungsanlage.

Es ist ferner bekannt (Zeitschrift »Colloque International de Commutation«, 7.—11. Mai 1979, Seiten 435 bis 440), mit unterschiedlichen Datenübertragungsprozeduren und mit unterschiedlichen Datenübertragungsformaten arbeitende Teilnehmereinrichtungen (das sind zum einen Telex-Einrichtungen, und das sind zum anderen Teletex-Einrichtungen) über eine Datenvermittlungseinrichtung EDS unter Einbeziehung von Umsetzern zu verbinden. Diese Umsetzer nehmen eine vollständige Prozedur- und Datenformat-Umsetzung der ihnen eingangsseitig jeweils zugeführten Signale vor, und zwar sowohl von Signalisierungsdaten als auch Informationsdaten. Die betreffenden Daten werden praktisch unverändert zwischen dem jeweiligen Umsetzer und dem jeweiligen Endgerät übertragen. Daß die Datenvermittlungsanlage EDS in die jeweilige Übertragungsverbindung mit einbezogen ist, ändert hieran nichts.

Der Erfindung liegt nun die Aufgabe zugrunde, einen Weg zu zeigen, wie auf relativ einfache Weise die obenerwähnte Entlastung der Datenvermittlungsanlage hinsichtlich der Bereitstellung von Verarbeitungszyklen auch für den Fall erhalten bleiben kann, daß die ein und derselben oder auch verschiedenen Überwachungsschaltungen zugeführten Signalisierungsdaten unterschiedlichen Signalisierungsprozeduren zugehörig sind.

Gelöst wird die vorstehend aufgezeigte Aufgabe bei einer Schaltungsanordnung der eingang erwähnten Art erfindungsgemäß durch die im kennzeichnenden Teil des Anspruchs 1 angegebenen Merkmale.

Die Erfindung bringt den Vorteil mit sich, daß mit relativ geringem schaltungstechnischem Aufwand sichergestellt ist, daß die vorhandene Datenvermittlungsanlage trotz Auftretens von unterschiedlichen Signalisierungsprozeduren zugehörigen Signalisierungsdaten mit nur einem Betriebsprogramm auskommt, um auf das Auftreten der betreffenden Signalisierungsdaten hin abgegebene Meldesignale zu verarbeiten. Unabhängig von den benutzten Signalisierungsprozeduren erscheint für die vorgesehene Datenvermittlungsanlage der Betrieb so, als wenn mit nur einer einzigen Signalisierungsprozedur gearbeitet wird. So werden beispielsweise nach den vom CCITT empfohlenen Signalisierungsprozeduren X.20 und X.70 abgegebene Signalisierungsdaten von der Datenvermittlungsanlage in der gleichen Weise behandelt wie Signalisierungsdaten, die nach der Signalisierungsprozedur X.21 auftreten. Für die Datenvermittlungsanlage werden jedenfalls trotz des Auftretens von unterschiedlichen Signalisierungsprozeduren zugehörigen Signalisierungsdaten stets festgelegte Meldesignale bereitgestellt, die von der Datenvermittlungsanlage in stes gleicher Art und Weise verarbeitet werden.

Zweckmäßige Weiterbildungen der Schaltungsanordnung gemäß der Erfindung ergeben sich aus den Unteransprüchen.

Anhand von Zeichnungen wird die Erfindung nachstehend beispielsweise näher erläutert.

Fig. 1 zeigt eine mögliche Ausführungsform einer Schaltungsanordnung gemäß der Erfindung.

Fig. 2 zeigt den näheren Aufbau einer Ausführungsform einer von bei der Schaltungsanordnung gemäß Fig. 1 vorgesehenen Überwachungsschaltungen.

Fig. 3 zeigt den möglichen Aufbau einer zweiten Ausführungsform einer von bei der Schaltungsanordnung gemäß Fig. 1 vorgesehenen Überwachungsschaltungen.

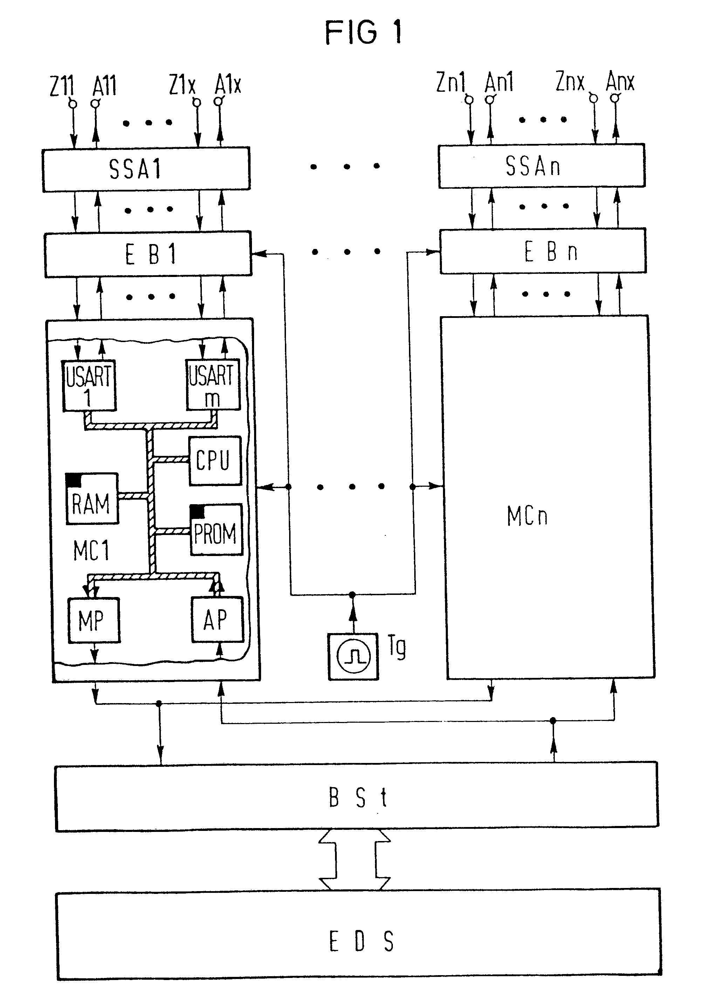

Die in Fig. 1 dargestellte Schaltungsanordnung besteht wie die in Fig. 1 der DE-A1-2 833 048 gezeigte Schaltungsanordnung im wesentlichen aus einer Anzahl von Überwachungsschaltungen, die durch Mikrocomputer MC1 bis MCn gebildet sein mögen, welche praktisch zwischen Daten in ankommender Übertragungsrichtung übertragenden Übertragungsleitungen, die als Zubringerleitungen bezeichnet werden, und Daten in abgehender Übertragungsrichtung übertragenden Übertragungsleitungen, die Abnehmerleitungen bezeichnet werden, einerseits und einer zentralen Datenvermittlungsanlage EDS andererseits angeschlossen sind. Bei dieser Datenvermittlungsanlage EDS mag es sich um das bereits bekannte elektronische Datenvermittlungssystem EDS handeln, wie es an verschiedenen Stellen bereits beschrieben worden ist (siehe z. B. »NTZ«, 1973, Heft 7, Seiten 297 bis 304, insbesondere Seite 302).

Bezüglich der in Fig. 1 angedeuteten programmgesteuerten Datenvermittlungsanlage EDS wird davon ausgegangen, daß in dieser Vermittlungsanlage Informationsdaten sowohl in Form von Polaritätswechseln als auch in Form jeweils einer Mehrzahl von Bits verarbeitet werden, die auch als Envelopes bezeichnet werden. Jedes Envelope kann dabei beispielsweise sechs oder acht Informationsbits und zwei zusätzliche Bits enthalten. Bei diesen zusätzlichen Bits handelt es sich um ein Zustandsbit und um ein Synchronisierbit. Die Informationsbits können beim sogenannten Speicherbetrieb in einem zu der Datenvermittlungsanlage EDS gehörenden zentralen Speicher abgespeichert werden, um einer bestimmten Abnehmerleitung zugeführt zu werden. Um Vermittlungsaufgaben erfüllen zu können, und zwar sowohl für den Durchschaltebetrieb als auch für den Speicherbetrieb, benötigt die Datenvermittlungsanlage EDS Signalisierungsinformationen. Derartige Signalisierungsinformationen werden aus Signalisierungsdaten gewonnen, die wie die Nachrichten- bzw. Informationsdaten über Zubringerleitungen zugeführt werden.

Die Daten in ankommender Übertragungsrichtung und die Daten in abgehender Übertragungsrichtung übertragenden Übertragungsleitungen sind gemäß Fig. 1 zu Übertragungsleitungsgruppen zusammengefaßt. Zu einer solchen Übertragungsleitungsgruppe gehören beispielsweise die Daten in ankommender Übertragungsrichtung übertragenden, als Zubringerleitungen zu bezeichnenden Übertragungsleitungen Z11 bis Z1x und die Daten in abgehender Übertragungsrichtung übertragenden, als Abnehmerleitungen zu bezeichnenden Übertragungsleitungen A11 bis A1x. Zu einer weiteren in Fig. 1 angedeuteten Übertragungsleitungsgruppe gehören die Zubringerleitungen Zn1 bis Znx und die Abnehmerleitungen An1 bis Anx. Die Anordnung mag auch hier so getroffen sein, daß innerhalb der jeweiligen Übertragungsleitungsgruppe stets mit einer Signalsender-/Signalempfängeranordnung verbundene Übertragungsleitungen enthalten sind. Im übrigen sei die betreffende Anordnung so ausgelegt, daß über die zu jeweils einer Übertragungsleitungsgruppe gehörenden Übertragungsleitungen Datensignale mit ein und derselben Datenübertragungsrate übertragen werden. Dabei können allerdings Signalisierungsdaten mit einer anderen Datenübertragungsrate übertragen werden als Informationsdaten (Nachrichtendaten).

Die bereits erwähnten Überwachungsschaltungen MC1 bis MCn sind -- wie bei der in Fig. 1 der DE-A1-2 833 048 gezeigten Schaltungsanordnung — mit den ihnen jeweils zugehörigen Übertragungsleitungen über Schnittstellenschaltungen SSA1 bis SSAn und Datenbehandlungsschaltungen EB1 bis EBn verbunden. Die Schnittstellenschaltungen SSA1 bis SSAn dienen der Pegelanpassung. Die Datenbehandlungsschaltungen EB1 bis EBn dienen jeweils dazu, die ihnen von den Zubringerleitungen her zugeführten Daten gegebenenfalls von zusammen mit diesen Daten übertragenen Zusatzzeichen zu befreien. Diese Maßnahme wird allerdings zweckmäßigerweise nur dann getroffen, wenn eine synchrone Datenübertragung erfolgt, bei der bekannt ist, an welcher Stelle die Zusatzzeichen auftreten. Handelt es sich hingegen um asynchrone Datenübertragungen, bei denen die Lager der Zusatzzeichen innerhalb der jeweils übertragenen Datensignale nicht bekannt ist, so werden in den Datenbehandlungsschaltungen zweckmäßigerweise keine Zeichen aus den jeweils zugeführten Zeichen entfernt. Unter den erwähnten Zusatzzeichen mögen hier Zusatzbits und Synchronisierbits verstanden werden, die zusammen mit den Informationsbits in Form der sogenannten Envelopes den Datenbehandlungsschaltungen über die Zubringerleitungen zugeführt werden.

Bezüglich der Datenbehandlungsschaltungen EB1 bis EBn sei hier noch angemerkt, daß diese — wie dies im Zusammenhang mit der Schaltungsanordnung gemäß Fig. 1 der DE-A1-2 833 048 erläutert worden ist — auch so ausgebildet sein mögen, daß sie den jeweils abzugebenden Daten auch Zusatzzeichen, wie Synchronisierbits, hinzuzufügen gestatten.

Die jeweils für die Bedienung einer Gruppe von Übertragungsleitungen vorgesehenen Überwachungsschaltungen MC1 bis MCn enthalten jeweils einen Mikroprozessor CPU, der die eigentliche Überwachung der jeweils eintreffenden Daten steuert. Wie in Fig. 1 näher gezeigt, ist der Mikroprozessor CPU der Überwachungsschaltung MC1 mit einer Reihe von Schaltungseinrichtungen verbunden. Zu diesen Schaltungseinrichtungen gehört ein Speicher PROM, der als Programmspeicher für den Mikroprozessor CPU dient. Ferner gehört zu den betreffenden Schaltungseinrichtungen ein Speicherblock RAM, der als Daten- und Befehlsspeicher für den Mikroprozessor CPU dient. Über diesen Speicherblock RAM werden die zwischen der Datenvermittlungsanlage EDS und den Übertragungsleitungen jeweils zu übertragenden Daten geleitet. Zu den erwähnten Schaltungseinrichtungen gehören ferner Sende-/Empfangsschaltungen USART1 bis USARTm, die durch kommerziell erhältliche universell einsetzbare synchron/asynchron betreibbare Sende/Empfangsbausteine gebildet sein mögen. Diese USART-Bausteine dienen im vorliegenden Fall der Serien-Parallel-Umsetzung der Datensignale zwischen der Übertragungsleitungsseite und der Seite der Datenvermittlungsanlage EDS.

Neben den zuvor erwähnten Schaltungseinrichtungen gehören zu der Überwachungsschaltung MC1 noch ein sogenannter Auftragspuffer AP und ein Meldepuffer MP. Der Auftragspuffer AP dient dazu, von der Datenvermittlungsanlage EDS abgegebene Auftragsbefehle aufzunehmen und der zugehörigen Überwachungsschaltung zu melden. Der Meldepuffer MP dient dazu, von der zugehörigen Überwachungsschaltung bereitgestellte Meldesignale an die Datenvermittlungsanlage EDS abzugeben, die daraufhin erforderliche Steuerungsvorgänge ausführt.

In Fig. 1 ist klar gezeigt, daß die Datenvermittlungsanlage EDS mit den Überwachungsschaltungen MC1 bis MCn über eine Befehlsablaufsteuerschaltung BSt verbunden ist. Diese Befehlsablaufsteuerschaltung mag im Prinzip der bei dem oben betrachteten bekannten Datenvermittlungssystem vorgesehenen Durchschaltesteuerung entsprechen. Diese Schaltung dient dazu, die Übertragung von Daten und Befehlen zwischen den Überwachungsschaltungen und der Vermittlungsanlage EDS zeitlich geordnet zu steuern.

Bei der in Fig. 1 dargestellten Schaltungsanordnung sind die Überwachungsschaltungen MC1 bis MCn und die Datenbehandlungsschaltungen EB1 bis EBn an einem gemeinsamen Taktgenerator Tg angeschlossen. Dieser Taktgenerator Tg gibt Taktimpulse mit einer Taktimpulsfrequenz ab, die durch die höchste auf den Übertragungsleitungen benutzte Datenübertragungsrate festgelegt ist. Da die einzelnen Überwachungsschaltungen für die Bedienung von unterschiedlichen Übertragungsgeschwindigkeitsklassen zugehörigen Übertragungsleitungen vorgesehen sein sollen, bedeutet dies, daß die einzelnen Übertragungsgeschwindigkeitsklassen in einem festen Verhältnis zueinander stehen. So mögen beispielsweise sämtliche Übertragungsleitungen Z11 bis Z1x und A11 bis A1x der Geschwindigkeitsklasse von 2,4 kbit/sec angehören, während sämtliche Übertragungsleitungen Zn1 bis Znx und An1 bis Anx der Übertragungsgeschwindigkeitsklasse von beispielsweise 9,6 kbit/sec angehören mögen. Damit würde in der Überwachungsschaltung MC1 jedes Datenzeichen viermal erfaßt werden können, da die die Verarbeitungsgeschwindigkeit in der Überwachungsschaltung MC1 mitbestimmenden Taktimpulse mit dem vierfachen der Datenübertragungsrate von 2,4 kbit/sec auftreten. An dieser Stelle sei noch angemerkt, daß den vorstehenden Verhältnissen völlig entsprechende Verhältnisse vorliegen, wenn für die Übertragung von Signalisierungsdaten eine geringere Übertragungsrate benutzt wird als für die Übertragung von Informationsdaten. So ist es ohne weiteres möglich, in der jeweiligen Überwachungsschaltung Signalisierungsdaten zu erfassen, die mit 200 bit/sec auftreten. In diesem Falle würde jedes Signalisierungsdatenzeichen mehrmals abgetastet werden können, um für eine Verarbeitung bereitzustehen. Im übrigen kann dadurch auf relativ einfache Weise eine Synchronisierung der jeweiligen Überwachungsschaltung auf die ihr zugeführten Datensignale vorgenommen werden, wie dies weiter unten noch näher ersichtlich werden wird.

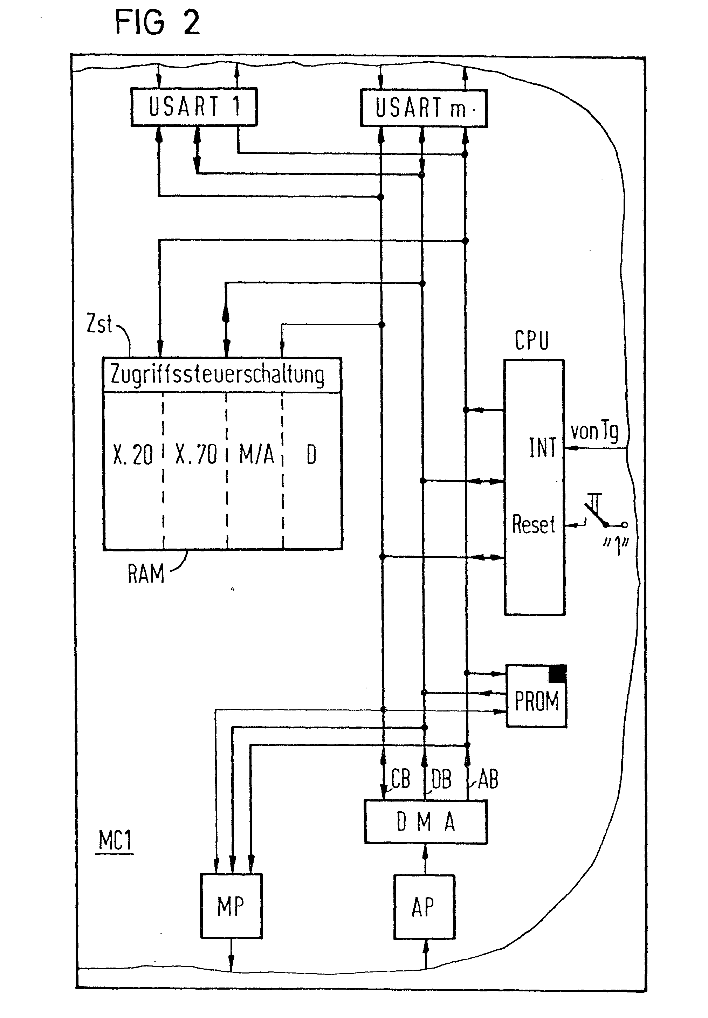

In Fig. 2 ist der mögliche Aufbau einer ersten Ausführungsform einer der bei der Schaltungsanordnung gemäß Fig. 1 zu verwendenden Überwachungsschaltungen gezeigt. Dabei ist der nähere Aufbau der in Fig. 1 bereits angedeuteten Überwachungsschaltung MC1 gezeigt. Gemäß Fig. 2 ist der Mikroprozessor CPU der Überwachungsschaltung MC1 über ein Busleitungssystem mit den verschiedenen Schaltungseinrichtungen dieser Überwachungsschaltung verbunden. Dieses Busleitungssystem umfaßt gemäß Fig. 2 drei Busleitungen, nämlich eine Adreßbusleitung AB, eine Datenbusleitung DB und eine Steuerbusleitung CB. Jede dieser Busleitungen enthält eine Mehrzahl von einzelnen Leitungen, beispielsweise jeweils acht einzelne Leitungen.

An den zuvor erwähnten Busleitungen AB, DB, CB sind zum einen die auch in Fig. 1 angedeuteten Sende-/Empfangsschaltungen USART1 bis USARTm mit entsprechenden Anschlüssen angeschlossen. Außerdem ist an den drei Busleitungen eine mit DMA bezeichnete Steuerschaltung angeschlossen, die eine DIREKT-Speicherzugriffssteuerschaltung darstellt. Diese Steuerschaltung DMA ist eingangsseitig am Ausgang des zugehörigen Auftragspuffers AP angeschlossen. Sie ermöglicht einen direkten Speicherzugriff zu einem Datenspeicher RAM, der mit einer Zugriffssteuerschaltung Zst an den drei Busleitungen AB, DB, CB angeschlossen ist. Der Datenspeicher RAM ist ein Speicher mit wahlfreiem Zugriff.

Neben den zuvor betrachteten Schaltungsteilen weist die in Fig. 2 dargestellte Überwachungsschaltung MC1 noch den in Fig. 1 bereits angedeuteten Programmspeicher PROM auf, bei dem es sich um einen programmierbaren oder nichtprogrammierbaren Lesespeicher handelt. Dieser Programmspeicher PROM ist mit Eingangs- bzw. Ausgangsanschlüssen an den drei Busleitungen angeschlossen. Dabei kann es gegebenenfalls ausreichen, den Programmspeicher PROM mit lediglich einem Steuereingang an einer Steuerleitung der Steuerbusleitung CB anzuschließen. Dies trifft auch für die Zugriffssteuerschaltung Zst des zuvor erwähnten Datenspeichers RAM zu.

An den drei Busleitungen ist ferner der in Fig. 1 bereits angedeutete Meldepuffer MP eingangsseitig angeschlossen. Dabei kann auch dieser Meldepuffer MP mit einem einzigen Steuereingang an einer einzigen Steuerleitung der Steuerbusleitung CB angeschlossen sein.

Damit die Überwachungsschaltung MC1 arbeiten kann, ist es erforderlich, dem zugehörigen Mikroprozessor CPU Steuersignale an gesonderten Steuereingängen zuzuführen. In Fig. 2 sind

zwei derartige Steuereingänge angedeutet; der eine Steuereingang ist ein Unterbrechungseingang INT, und der andere Steuereingang ist ein Rücksetzeingang Reset. Der Steuereingang INT erhält von dem in Fig. 1 angedeuteten Taktgenerator Tg her Taktimpulse zugeführt. Diese Taktimpulse treten dabei mit einer Folgefrequenz auf, die durch die höchste auf den Übertragungsleitungen benutzte Datenübertragungsrate (z. B. von 9,6 kbit/sec) festgelegt ist. An dem anderen Steuereingang Reset des Mikroprozessors CPU ist über einen in Fig. 2 angedeuteten manuell betätigbaren Schalter ein Auslösesignal »1« bei Bedarf zuführbar. Die Zuführung dieses Signals bewirkt, daß der Mikroprozessor CPU in seine Ausgangsstellung zurückkehrt, von der aus er nach Maßgabe eines in ihm enthaltenen Befehlszählers mit der erneuten Ausführung von Steuerungsvorgängen beginnt.

Im folgenden sei die Arbeitsweise der Schaltungsanordnung gemäß der Erfindung unter Betrachtung der in der Überwachungsschaltung MC1 ablaufenden Vorgänge erläutert. Geht man davon aus, daß der Mikroprozessor CPU gerade sämtliche mit seiner zugehörigen Überwachungsschaltung MC1 verbundenen Übertragungsleitungen bedient hat, so laufen mit Auftreten des nächsten Taktimpulses am Steuereingang INT des Mikroprozessors CPU folgende Vorgänge ab. Der Mikroprozessor CPU steuert auf seine gerade erwähnte Ansteuerung hin den Programmspeicher PROM an, der daraufhin dem Mikroprozessor CPU die die einzelnen abzufragenden Schaltungseinrichtungen angebenden Daten bereitstellt. Aufgrund dieser Daten fragt der Mikroprozessor CPU nunmehr in einer vorgegebenen Reihenfolge die mit Zubringerleitungen verbundenen zugehörigen Sende-/Empfangsschaltungen USART1 bis USARTm ab, um das Auftreten von vorgegebenen Bitkombinationen zu ermitteln. Mit solchen vorgegebenen Bitkombinationen mögen im vorliegenden Fall Signalisierungsdaten auftreten. Ferner soll der Mikroprozessor CPU auf seine gerade erwähnte Ansteuerung hin die Steuerschaltung DMA auf das Vorliegen von Informationssignalen abfragen, die die Übertragung von Daten über die zugehörigen Abnehmerleitungen betreffen. Dabei kann so vorgegangen sein, daß abwechselnd Abfragevorgänge bezüglich einer Zubringerleitung und bezüglich einer Abnehmerleitung ausgeführt werden, wobei bezüglich der jeweiligen Abnehmerleitung das Vorliegen von Auftragsbefehlen in der Steuerschaltung DMA überprüft wird. Die Überwachungs- bzw. Prüfvorgänge werden dabei mit einer solchen Geschwindigkeit ausgeführt, daß mit Sicherheit bis zum Auftreten des nächsten Impulses am Steuereingang INT des Mikroprozessors CPU sämtliche Leitungen bedient sind, die mit der zugehörigen Überwachungsschaltung MC1 verbunden sind. Damit werden also während des Auftretens sämtlicher ein Envelope bildender Bits auf einer der Übertragungsleitungen die auf sämtlichen Übertragungsleitungen auftretenden Daten bzw. die diese Daten bildenden Envelopes erfaßt, und zwar in beiden Übertragungsrichtungen.

Mit den im vorliegenden Fall benutzten Überwachungsschaltungen ist es nun im Unterschied zu den in der DE-A1-2 833 048 beschriebenen Verhältnissen möglich, eine Vorverarbeitung der Signalisierungsdaten unterschiedlicher Signalisierungsprozeduren vorzunehmen. Wie eingangs bereits erwähnt, können im Zuge unterschiedlicher Datenübertragungen über die Datenvermittlungsanlage EDS auch unterschiedliche Signalisierungsprozeduren benutzt werden, wie sie vom CCITT empfohlen worden sind. Eine derartige Signalisierungsprozedur mag die Signalisierungsprozedur nach X.20 sein, und eine andere Signalisierungsprozedur mag die Signalisierungsprozedur nach X.70 sein. Diese Signalisierungsprozeduren unterscheiden sich hinsichtlich der Reihenfolge und Länge der einzelnen Signalisierungsdaten, die bestimmte Vermittlungsvorgänge auslösen sollen. Da der spezielle Aufbau der Signalisierungsdaten der verschiedenen Signalisierungsprozeduren für das Verständis der vorliegenden Erfindung nicht erforderlich erscheint, wird hier auf die unterschiedlichen Signalisierungsprozeduren auch nicht weiter eingegangen werden. Es sei allerdings noch darauf hingewiesen, daß die unterschiedlichen Signalisierungsprozeduren gegebenenfalls auch die Anwendung unterschiedlicher Übertragungsraten für die betreffenden Signalisierungsdaten einschließen.

Bei Verwendung der in Fig. 2 angedeuteten Überwachungsschaltung MC1 werden nun die Signalisierungsdaten der unterschiedlichen Signalisierungsprozeduren in den Datenspeicher RAM eingespeichert, und zwar jeweils in einen der jeweiligen Signalisierungsprozedur zugehörigen Speicherbereich. So werden die Signalisierungsdaten der Signalisierungsprozedur X.20 in den mit X.20 bezeichneten Speicherbereich des Datenspeichers RAM eingespeichert, und die Signalisierungsdaten der Signalisierungsprozedur X.70 werden in den mit X.70 bezeichneten Speicherbereich des Datenspeichers RAM eingespeichert. Zu diesem Zweck werden der Zugriffssteuerschaltung Zst des Datenspeichers RAM das Einschreiben der Signalisierungsdaten in den jeweils in Frage kommenden Speicherbereich ermöglichende Adressen und Steuersignale von dem zugehörigen Mikroprozessor CPU her zugeführt. Dieser Mikroprozessor CPU muß dazu vorher darüber Informationen eingeholt haben, in welcher Signalisierungsprozedur Signalisierungsdaten auftreten. Derartige Informationen — die lediglich erforderlich sind, wenn Signalisierungsdaten unterschiedlicher Signalisierungsprozeduren auftreten können — können beispielsweise zu Beginn jeder Datensignalübertragung von einem an einer der Zubringerleitungen angeschlossenen Datensignalsender abgegeben werden.

Auf die Einspeicherung der Signalisierungsdaten der jeweiligen Signalisierungsprozedur in einem festgelegten Speicherbereich des Datenspeichers RAM hin wird unter der Steuerung durch den zugehörigen Mikroprozessor CPU eine Umsetzung vorgenommen, durch die den betreffenden Signalisierungsdaten entsprechende Signalisierungsdaten gewonnen werden, die zur erneuten Ansteuerung des Datenspeichers RAM herangezogen werden können. Die Zuordnungen zwischen den Signalisierungsdaten der unterschiedlichen Signalisierungsprozeduren können beispielsweise in Internregistern des Mikroprozessors CPU oder in dem vorgesehenen Programmspeicher PROM festgehalten sein. Dabei kann so vorgegangen sein, daß nach Auslesen der in dem Datenspeicher RAM gespeicherte Signalisierungsdaten entsprechend der Signalisierungsprozedur X.20 oder X.70 an diesen Datenspeicher RAM Signalisierungsdaten entsprechend der Signalisierungsprozedur X.21 abgegeben werden, auf deren Auftreten hin aus diesem Datenspeicher RAM Meldesignale an den Meldepuffer MP abgegeben werden. Zu diesem Zweck wird in dem Datenspeicher RAM ein mit M/A bezeichneter Speicherbereich adressiert werden müssen, in welchem Meldesignale darstellende Bitkombinationen gespeichert sind, die den Signalisierungsdaten der Signalisierungsprozedur X.21 zugehörig sind.

Die in Fig. 2 dargestellte Schaltungsanordnung kann nun nicht nur Meldesignale auf das Auftreten von ihr zugeführten Signalisierungsdaten hin abgeben, sondern sie kann auf ihr zugeführte Auftragsbefehle hin auch Signalisierungsdaten abgeben. Wird im Zuge der Abfrage der Steuerschaltung DMA festgestellt, daß ein Auftragsbefehl zur Abgabe von Signalisierungsdaten vorliegt, so wird auf das Auslesen dieses Auftragsbefehls aus der Steuerschaltung DMA unter der Mitwirkung des Mikroprozessors CPU der mit M/A bezeichnete Speicherbereich des Datenspeichers RAM angesteuert. Auf diese Ansteuerung hin können aus dem Datenspeicher RAM die dem betreffenden Auftragsbefehl zugehörigen Signalisierungsdaten entsprechend der Signalisierungsprozedur X.21 ausgelesen werden. Daraufhin wird unter Mitwirkung der Zentraleinheit CPU und des Programmspeichers PROM eine Umsetzung dieser Signalisierungsdaten in Signalisierungsdaten der Signalisierungsprozedur (X.20 oder X.70) vorgenommen, gemäß der die Signalisierungsdaten über eine Abnehmerleitung auszusenden sind. Zu diesem Zweck steuert der zugehörige Mikroprozessor CPU — nachdem die in Frage kommenden Signalisierungsdaten gemäß der Signalisierungsprozedur X.21 bereitstehen — denjenigen Speicherbereich des Datenspeichers RAM an, in welchem die diesen Signalisierungsdaten entsprechenden Signalisierungsdaten der gewünschten anderen Signalisierungsprozedur (X.20 oder X.70) enthalten sind: Diese Signalisierungsdaten der gewünschten anderen Signalisierungsprozedur werden dann aus dem Datenspeicher RAM ausgelesen und über die in Frage kommende adressierte Sende-/Empfangsschaltung USART1 oder USARTm abgegeben.

Im Zuge der zuvor erläuterten Vorgänge wird der Mikroprozessor CPU für jede Signalübertragung die Adresse der ein Signal abgebenden Einrichtung und der das betreffende Signal aufnehmenden Einrichtung bereitstellen. Dabei wird, wie im Zusammenhang mit dem Einsatz von Mikroprozessoren an sich bekannt, so vorgegangen, daß mit der Ansteuerung bzw. Adressierung einer Einrichtung, von der Signale gegebenenfalls abzuholen sind, eine Adressen- und Steuerinformation bereitgestellt wird, durch die angegeben wird, wohin die betreffenden Signale zu übertragen sind.

Im Zusammenhang mit der in Fig. 2 dargestellten Überwachungsschaltung sei nochmals kurz auf den Datenspeicher RAM eingegangen. Dieser Datenspeicher RAM weist neben den bereits erläuterten Speicherbereichen noch einen mit D bezeichneten Speicherbereich auf. Dieser Speicherbereich D dient zur Zwischenspeicherung von Signalen, die keiner Verarbeitung in der betreffenden Überwachungsschaltung unterzogen werden. Bei derartigen Daten handelt es sich insbesondere um Informationsdaten, die von einer Zubringerleitung zu einer Abnehmerleitung zu übertragen sind. Diese Übertragung kann dabei nach dem Durchschalteprinzip oder nach dem Speicherprinzip erfolgen, gemäß welchem die betreffenden Daten in der in Fig. 1 angedeuteten Datenvermittlungsanlage EDS zwischengespeichert werden. Die betreffenden Daten werden bei der in Fig. 2 dargestellen Überwachungsschaltung ebenfalls über den zugehörigen Meldepuffer MP abgegeben, und zwar entweder an den Auftragspuffer AP derselben Überwachungsschaltung oder an den Auftragspuffer einer anderen Überwachungsschaltung (je nachdem, an welcher der Überwachungsschaltungen die gewünschte Abnehmerleitung angeschlossen ist). Dabei wird die betreffende Datenübertragung lediglich beim Speicherbetrieb über den zentralen Speicher der Datenvermittlungsanlage EDS abgewickelt werden, während beim Durchschaltebetrieb der betreffende Meldepuffer und der in Frage kommende Auftragspuffer gewissermaßen direkt miteinander verbunden sein werden.

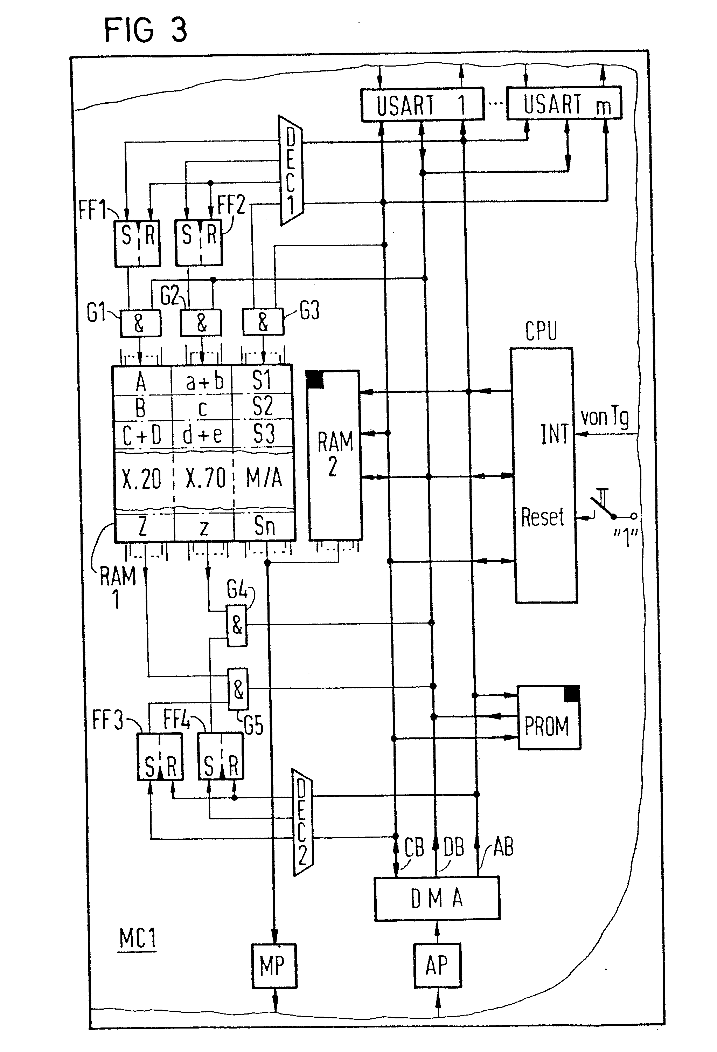

Nunmehr sei der Aufbau und die Wirkungsweise der in Fig. 3 dargestellten Schaltungsanordnung näher betrachtet. Diese Schaltungsanordnung stellt eine weitere Ausführungsform der in Fig. 1 angedeuteten Überwachungsschaltung MC1 dar. Im Unterschied zu der in Fig. 2 dargestellten Ausführungsform der betreffenden Überwachungsschaltung weist die in Fig. 3 dargestellte Überwachungsschaltung zwei Datenspeicher RAM1 und RAM2 auf. Der Datenspeicher RAM1 weist drei verschiedene Speicherbereiche auf, die mit X.20, X.70 bzw. M/A bezeichnet sind. Diese Speicherbereiche des Datenspeichers RAM1 sind eingangsseitig selektiv ansteuerbar, und zwar über UND-Glieder, von denen pro Speicherbereich jeweils nur ein UND-Glied angedeutet ist. Dabei handelt es sich um die UND Glieder G1, G2 und G3. Von diesen UND-Gliedern sind die beiden UND-Glieder G1 und G2 an den einen Ausgängen von bistabilen Kippgliedern FF1 bzw. FF2 angeschlossen, die mit ihren Setzeingängen S an gesonderten Ausgängen eines Decoders DEC1 und die mit ihren Rücksetzeingängen R gemeinsam an einem Ausgang dieses Decoders DEC1 angeschlossen sind. An einem weiteren Ausgang des Decoders DEC1 ist das in Fig. 3 angedeutete UND-Glied G3 mit einem Eingang angeschlossen. Mit einem weiteren Eingang ist das UND-Glied G3 an der Steuerbusleitung CB angeschlossen. Die UND-Glieder G1 und G2 sind mit ihren anderen Eingängen gemeinsam an der Datenbusleitung DB angeschlossen.

Ausgangsseitig sind die beiden Speicherbereiche X.20 und X.70 des Datenspeichers RAM über selektiv aktivierbare UND-Glieder mit der Datenbusleitung DB verbunden. Von diesen UND-Gliedern sind im vorliegenden Fall lediglich zwei UND-Glieder G4 und G5 angedeutet, die mit ihren einen Eingängen an Ausgängen der beiden Speicherbereiche X.70 bzw. X.20 des Datenspeichers RAM1 angeschlossen sind und die mit ihren anderen Eingängen an den einen Ausgängen zweier bistabiler Kippglieder FF3, FF4 angeschlossen sind. Diese bistabilen Kippglieder FF3, FF4 sind mit ihren Setzeingängen S an gesonderten Ausgängen eines Decoders DEC2 und mit ihren Rücksetzeingängen R gemeinsam an einem Ausgang dieses Decoders DEC2 angeschlossen. Dieser Decoder DEC2 ist wie der Decoder DEC1 an der Steuerbusleitung CB und an der Adreßbusleitung AB gemäß Fig. 3 angeschlossen. Die betreffenden Decoder können im übrigen auch durch einen einzigen Decoder gebildet sein.

Der bereits erwähnte Speicherbereich M/A des Datenspeichers RAM1 ist ausgangsseitig mit der Eingangsseite des Meldepuffers MP verbunden. Mit der Eingangsseite dieses Meldepuffers MP sind im übrigen gesonderte Ausgänge des zweiten Datenspeichers RAM2 verbunden, der im übrigen mit den drei erwähnten Busleitungen AB, DB, und CB der in Fig. 3 dargestellten Überwachungsschaltung verbunden ist.

Mit Ausnahme des vorstehend erläuterten Schaltungsaufbaus stimmt der in Fig. 3 dargestellte Schaltungsaufbau vollständig mit dem Schaltungsaufbau gemäß Fig. 2 überein. Dies betrifft die Verbindung des Auftragspuffers AP mit der Steuerschaltung DMA sowie die Verbindung zwischen dem Mikroprozessor CPU, dem Programmspeicher PROM, den Sende-/Empfangsschaltungen USART1 bis USARTm und der Steuerschaltung DMA.

Im Unterschied zu der in Fig. 2 dargestellten Schaltungsanordnung arbeitet die in Fig. 3 dargestellte Schaltungsanordnung in etwas anderer Art und Weise. Dies hängt im wesentlichen mit der Organisation des Datenspeichers RAM1 zusammen. Nimmt man beispielsweise an, daß die zu verarbeitenden Signalisierungsdaten, die der Überwachungsschaltung über irgendeine der an sie angeschlossenen Zubringerleitungen zugeführt werden, Signalisierungsdaten der Signalisierungsprozedur X.20 sind, so laufen folgende Vorgänge ab. Zunächst wird der Decoder DEC1 von dem Mikroprozessor CPU her adressiert, um das bistabile Kippglied FF1 zu setzen. Damit können dann die betreffenden Signalisierungsdaten über UND-Glieder (die durch das UND-Glied G1 angedeutet sind) in den Speicherbereich X.20 des Datenspeichers RAM1 eingeschrieben werden. Dieser Datenspeicher RAM1 ist ein sogenannter Zuordnungsspeicher, der auf die Aufnahme von Signalisierungsdaten in der jeweils festgelegten Signalisierungsprozedur hin die diesen Signalisierungsdaten zugehörigen Meldesignale von der Ausgangsseite seines Speicherbereichs M/A abgeben mag. So mag der Datenspeicher RAM1 auf die Aufnahme von Signalisierungsdaten A entsprechend der Signalisierungsprozedur X.20 hin ein Meldesignal S1 ausgangsseitig abgeben, welches dem Meldepuffer M1 zugeführt wird. Wenn hingegen die Signalisierungsprozedur X.70 ausgewählt ist, wird das betreffende Meldesignal S1 auf die Aufnahme von Signalisierungsdaten a + b hin abgegeben. Weitere Zuordnungen zwischen den Signalisierungsdaten und den Meldesignalen sind in dem Datenspeicher RAM1 gemäß Fig. 3 angedeutet. Entsprechend diesen Zuordnungen werden Meldesignale S2, S3, Sn auf das Auftreten von Datensignalen B, C + D bzw. Z entsprechend der Signalisierungsprozedur X.20 oder auf das Auftreten von Signalisierungsdaten c, d + e bzw. z entsprechend der Signalisierungsprozedur X.70 abgegeben.

Der Datenspeicher RAM1 wird nun auch dazu herangezogen, auf die Ermittlung von Auftragsbefehlen hin gewünschte Signalisierungsdaten abzugeben. Zu diesem Zweck werden die Auftragsbefehle über in den übertragungsfähigen Zustand gesteuerte UND-Glieder (die durch das UND-Glied G3 dargestellt sein mögen) dem Speicherbereich M/A des Datenspeichers RAM1 zugeführt. Auf die Zuführung dieser Auftragsbefehle hin — die mit den in dem betreffenden Speicherbereich M/A eingetragenen Signalen S1 bis Sn übereinstimmen mögen — stellt der Datenspeicher RAM1 ausgangsseitig die Signalisierungsdaten entsprechend den Signalisierungsprozeduren X.20 und X.70 an gesonderten Ausgängen bereit. Je nachdem entsprechend welcher Signalisierungsprozedur die Signalisierungsdaten abzugeben sind, werden die dem UND-Glied G4 oder dem UND-Glied G5 entsprechenden UND-Glieder übertragungsfähig sein, um die betreffenden Signalisierungsdaten über die Datenbusleitung DB an die in Frage kommende Sende-/Empfangsschaltung USART1 bis USARTm abzugeben.

Solche Datensignale, die keiner Bewertung bzw. Verarbeitung in der Überwachungsschaltung MC1 gemäß Fig. 3 zu unterziehen sind, werden in dem vorgesehenen Datenspeicher RAM2 zwischengespeichert, der damit die Funktion des Speicherbereichs D der in Fig. 2 dargestellten Schaltungsanordnung erfüllt.

Nachstehend sei bezüglich der in Fig. 2 und 3 dargestellten Schaltungsanordnungen noch darauf hingewiesen, daß die für einen direkten Speicherzugriff vorgesehenen Steuerschaltungen DMA auf ihre Ansteuerung von dem jeweils zugehörigen Mikroprozessor CPU wirksam werden, um die Einspeicherung der über den zugehörigen Auftragspuffer AP zugeführten Auftragsbefehle darstellenden Signale in den in Frage kommenden Datenspeicher zu bewirken und zugleich für die Dauer dieser Einspeicherung den zugehörigen Mikroprozessor in den unwirksamen Zustand zu steuern. Der Mikroprozessor übernimmt die Steuerungsaufgaben dann wieder im Anschluß an die Ausführung des erwähnten Einspeichervorgangs. Auf die damit zusammenhängenden Steuerungsvorgänge braucht hier nicht weiter eingegangen zu werden, da diese Steuerungsvorgänge den Steuerungsvorgängen völlig entsprechen, die beim normalen Betrieb von DMA-Bausteinen und Mikroprozessoren abgewickelt werden.

Wie oben bereits angedeutet, ist es möglich, den Betrieb der einzelnen Überwachungsschaltungen auf die diesen zugeführten Datensignale gewissermaßen zu synchronisieren, bezüglich der zunächst nicht bekannt ist, mit welcher Phasenlage die die betreffenden Datensignale enthaltenden Bitgruppen bzw. Envelopes in bezug auf den Zeitpunkt der Verarbeitung dieser Signale in der jeweiligen Überwachungsschaltung auftreten. Da der vorgesehene Taktgenerator Tg Taktimpulse mit einer durch die höchste auf den Übertragungsleitungen benutzte Datenübertragungsrate festgelegten Taktimpulsfrequenz abgibt, kann jedes der mit einer demgegenüber niedrigeren Taktimpulsfrequenz auftretenden Signalisierungsdaten mehrmals in der jeweiligen Überwachungsschaltung taktgesteuert erfaßt werden. Nimmt man beispielsweise an, daß jedes derartige Signalisierungsdatenzeichen 20mal taktgesteuert erfaßt werden kann, so wird zweckmäßigerweise die zehnte Abtastung jedes derartigen Signalisierungsdatenzeichens erfaßt. Dieser als Synchronisiervorgang zu betrachtende Vorgang braucht lediglich bezüglich des ersten auftretenden Signalisierungsdatenzeichens vorgenommen zu werden, da die nachfolgenden Signalisierungsdatenzeichen dann bei fest vorgegebener Übertragungsfrequenz genau erfaßt werden können. Tritt beispielsweise das erste Signalisierungsdatenzeichen als Binärsignal »1« auf, dem ein Binärsignal »0« folgt, so kann aus der Anzahl der ermittelten »1«-Abtastimpulse bezüglich des ersten Signalisierungsdatenzeichens genau der Abtastimpuls ermittelt und festgelegt werden, zu dem alle nachfolgenden Datensignalzeichen abzutasten sind. Diese Aufgabe vermag der Mikroprozessor CPU der jeweiligen Überwachungsschaltung mit zu übernehmen.

Abschließend sei noch bemerkt, daß in den Zeichnungen die einzelnen Schaltungsteile lediglich in ihrem funktionellen Zusammenwirken dargestellt sind; die erforderlichen Stromversorgungseinrichtungen sowie die überlicherweise vorgesehene Taktsteuerung der einzelnen Schaltungseinrichtungen sind nicht gezeigt. Als Mikroprozessor kann im vorliegenden Fall praktisch jeder kommerziell erhältliche Mikroprozessor verwendet werden, wie beispielsweise Mikroprozessoren der Bezeichnung 8085 der Firma Intel. Die Speicher können ebenfalls durch kommerziell erhältliche Speicherbausteine gebildet sein. Die im wesentlichen der Parallel-Serien-Umsetzung dienenden Sende-/Empfangsschaltungen USART1 bis USARTm können durch USART-Bausteine der Bezeichnung 8251 der Firma Intel gebildet sein. Als Steuerschaltung DMA eignet sich vorzugsweise ein DMA-Baustein mit der Bezeichnung 8257 der Firma Intel. Die Auftragspuffer können durch Speicherbausteine mit der Bezeichnung MM67401 gebildet sein. Die bei der Ausführungsform gemäß Fig. 3 verwendeten UND-Glieder können durch sogenannte Tristate-Verknüpfungsglieder gebildet sein, die ebenso kommerziell erhältlich sind wie die bei dieser Ausführungsform verwendeten bistabilen Kippglieder und Decoder.

**Patentansprüche**

1. Schaltungsanordnung zur Aufnahme von jeweils eine Mehrzahl von Bits umfassenden Informationsdaten und Signalisierungsdaten von diese Daten in ankommender Übertragungsrichtung übertragenden, Zubringerleitungen (Z11 bis Z1x, Zn1 bis Znx) darstellenden Übertragungsleitungen und zur Abgabe von diesen Daten entsprechenden Daten an eine programmgesteuerte Datenvermittlungsanlage (EDS) sowie zur Abgabe von jeweils eine Mehrzahl von Bits umfassenden Informationsdaten und Signalisierungsdaten über die Daten in abgehender Übertragungsrichtung übertragende, Abnehmerleitungen (A11 bis A1x, An1 bis Anx) darstellende Übertragungsleitungen auf eine Ansteuerung durch die Datenvermittlungsanlage hin, in der eine Aufnahme von Daten durch die Abgabe von Meldesignalen gesteuert wird, die aus dem Auftreten von Daten auf den Zubringerleitungen abgeleitet werden, und von der die Abgabe von Daten über Abnehmerleitungen durch Abgabe von Auftragsbefehlen gesteuert wird,
wobei sämtliche über die Zubringerleitungen zugeführten Signalisierungsdaten in Mikroprozessoren (CPU) enthaltenden gesonderten Überwachungsschaltungen (MC1 bis MCn) durch Ansteuerung der Mikroprozessoren aufgenommen und ohne Weitergabe an die Datenvermittlungsanlage auf das Vorliegen von bestimmten vorgegebenen Bitkombinationen überprüft werden, wobei auf die Ermittlung bestimmter vorgegebener Bitkombinationen in den in der jeweiligen Überwachungsschaltung aufgenommenen Signalisierungsdaten für diese Bitkombinationen charakteristische Meldesignale durch die Mikroprozessoren an die Datenvermittlungsanlage abgegeben werden, in der daraufhin erforderliche Steuerungsvorgänge ausgeführt werden, und wobei über die Abnehmerleitungen abzugebende Signalisierungsdaten von den Überwachungsschaltungen auf alleinige Zuführung von Auftragsbefehlen von der Datenvermittlungsanlage her abgegeben werden, dadurch gekennzeichnet, daß für die Aufnahme und Abgabe von Signalisierungsdaten unterschiedlicher Signalisierungsprozeduren (X.20, X.70) jede Überwachungsschaltung (MC1 bis MCn) einen gesonderten Mikroprozessor (CPU) enthält, der die Einspeicherung sämtlicher Signalisierungsdaten bzw. Auftragsbefehle in einem Zuordnungsspeicher (RAM; RAM1) und die Ausgabe von für die Bitkombinationen der Signalisierungsdaten charakteristischen Meldesignalen bzw. von durch die Auftragsbefehle festgelegten Bitkombinationen der Signalisierungsdaten steuert, daß der jeweilige Zuordnungsspeicher (RAM; RAM1) auf seine Ansteuerung durch unterschiedlichen Signalisierungsprozeduren (X.20, X.70) zugehörigen Signalisierungsdaten bzw. durch Auftragsbefehle in den Bitkombinationen der betreffenden Signalisierungsdaten zugehörige Meldesignale bzw. die für den jeweiligen Auftragsbefehl charakteristischen, einer ausgewählten bzw. festgelegten Signalisierungsprozedur (X.20, X.70) zugehörigen Signalisierungsdaten abgibt, und daß in jeder Überwachungsschaltung (MC1 bis MCn) Speicherplatz (RAM-D; RAM2) für die Aufnahme und Weiterleitung von Informationsdaten vorgesehen ist.

2. Schaltungsanordnung nach Anspruch 1, dadurch gekennzeichnet, daß der Mikroprozessor (CPU) der jeweiligen Überwachungsschaltung (MC1 bis MCn) im Takte von auf den Zubringerleitungen (Z11 bis Z1x, Zn1 bis Znx) bzw. Abnehmerleitungen (A11 bis A1x, An1 bis Anx) maßgebenden Datenübertragungsraten die Abfrage sämtlicher Zubringerleitungen und die Ermittlung von Auftragsbefehlen für die Abgabe von Daten über Abnehmerleitungen steuert.

3. Schaltungsanordnung nach Anspruch 2, dadurch gekennzeichnet, daß für sämtliche Überwachungsschaltungen (MC1 bis MCn) ein gemeinsamer Taktgenerator (Tg) vorgesehen ist, der Taktimpulse mit einer durch die höchste auf den Übertragungsleitungen (Z11 bis Z1x, Zn1 bis Znx; A11 bis A1n, An1 bis Anx) benutzte Datenübertragungsrate festgelegten Taktimpulsfrequenz abgibt.

## Claims

1. A circuit arrangement for receiving items of information data and signalling data, each of which comprises a plurality of bits, from transmission lines transmitting these data items in the incoming transmission direction, constituting incoming lines (Z11 to Z1x, Zn1 to Znx), and for the emission of items of data corresponding to the aforementioned data items to a programme-controlled data exchange installation (EDS) and for the emission of items of information data and signalling data, each of which comprise a plurality of bits, via transmission lines transmitting the data in the outgoing transmission direction, constituting outgoing lines (A11 to A1x, An1 to Anx), in response to operation by the data exchange installation in which the reception of data is controlled by the emission of message signals which are derived from the occurrence of data items on the incoming lines and from which the emission of data via outgoing lines is controlled by the emission of job commands, where all the items of signalling data supplied via the incoming lines are received in special monitoring circuits (MC1 to MCn) which include microprocessors (CPU) under the control of the microprocessors an without being forwarded to the data exchange installation are checked in respect of the existence of specific, predetermined bit combinations, wherein, when specific predetermined bit combinations are discovered in the items of signalling data received in the monitoring circuit in question, message signals characteristic of the bit combinations are emitted by thy microprocessors to the data exchange installation in which the necessary control procedures are subsequently executed, and wherein items of signalling data to be emitted via the outgoing lines are emitted by the monitoring circuits simply as a result of the supply of job commands from the data exchange installation, characterized in that for the reception and emission of items of signalling data which conform with different signalling procedures (X.20, X.70), each monitoring circuit (MC1 to MCn) includes a special microprocessor (CPU) which controls the input of all the items of signalling data and job commands into an allocation store (RAM; RAM1) an the output of message signals characteristic of the bit combinations of the items of signalling data and bit combinations of the signalling data specified by the job commands, that when operated my means of items of signalling data assigned to different signalling procedures (X.20, X.70) or by means of job commands, the relevant allocation store (RAM; RAM1) emits message signals assigned to the bit combinations of the relevant items of signalling data or emits the items of signalling data which are characteristic of the particular job command and are assigned to a selected or stipulated signalling procedure (X.20, X.70), and that in each monitoring circuit (MC1 to MCn) storage space (RAM-D; RAM2) is provided for the reception and forwarding of items of information data.

2. A circuit arrangement as claimed in claim 1, characterized in that in the timing of data transmission rates which govern the incoming lines (Z11 to Z1x, Zn1 to Znx) and outgoing lines (A11 to A1x, An1 to Anx), the microprocessor (CPU) of the respective monitoring circuit (MC1 to MCn) controls the interrogation of all the incoming lines and the determination of job commands for the emission of data via outgoing lines.

3. A circuit arrangement as claimed in claim 2, characterized in that a common clock pulse generator (Tg) is provided for all the monitoring circuits (MC1 to MCn), which clock pulse generator emits clock pulses with a clock pulse frequency which is determined by the highest data transmission rate used on the transmission line (Z11 to Z1x, Zn1 to Znx; A11 to A1n, An1 to Anx).

**Revendications**

1. Circuit pour la réception de données d'information comportant chacune une pluralité de bits et de données de signalisation de conducteurs de transmission représentant des conducteurs d'acheminement (Z11 à Z1x, Zn1 à Znx), transmettant ces données dans la direction de transmission d'entrée, et pour l'émission de données, qui correspondent à ces données, à une installation de commutation de données (EDS) à commande programmée, ainsi que pour fournir des données d'informations comportant une pluralité de bits et de données de signalisation, par l'intermédiaire de conducteurs de transmission qui représentent des conducteurs de prise en charge (A11 à A1x, An1 à Anx) et qui transmettent les données dans le sens de la transmission de départ, à une commande pour l'installation de commutation de données dans laquelle est commandée une réception de données pour l'émission de signaux de signalisation qui sont dérivés de l'apparition de données sur les conducteurs d'acheminement et à partir de laquelle est commandée, par l'émission d'instructions de commande, l'émission de données par l'intermédiaire des conducteurs d'émission, du type dans lequel toutes les données de signalisation acheminées par les conducteurs d'acheminement sont prises en charge dans des circuits de contrôle (MC1 à MCn) particuliers, contenant des microprocesseurs (CPU), par attaque de ces derniers, et sont contrôlées, sans être transmises à l'installation de commutation de données, pour déterminer la présence de certaines combinaisons de bits prédéterminées, dans lequel, après détermination de certaines combinaisons de bits prédéterminées dans les données de signalisation prises en charge dans le circuit de contrôle concerné, des signaux de signalisation qui sont caractéristiques pour ces combinaisons de bits, sont transmis par les microprocesseurs à l'installation de commutation de données dans lequel sont alors exécutées les opérations de commande, et dans lequel, par l'intermédiaire des conducteurs de prise en charge, des données de signalisation à émettre sont émises par les circuits de contrôle, à la suite de la seule fourniture d'instructions de commande provenant de l'installation de commutation de données, caractérisé par le fait

que pour la prise en charge et l'émission de données de signalisation de différentes procédures de signalisation (X.20, X.70), chaque circuit de contrôle (MC1 à MCn) comporte un microprocesseur distinct (CPU) qui commande la mémorisation de toutes les données de signalisation et instructions de commande dans une mémoire de coordination (RAM; RAM1), et l'émission de signaux de signalisation qui sont caractéristiques pour les combinaisons de bits des données de signalisation ou de combinaisons de bits des données de signalisation, déterminées par les instructions de commande,

que la mémoire de coordination concernée (RAM; RAM1), en réponse à sa commande par des données de signalisation appartenant à différents procédures de signalisation (X.20, X.70) ou par des instructions de commande dans les signaux de signalisation appartenant à des combinaisons de bits des données de signalisation concernées, émet des données de signalisation appartenant à une procédure de signalisation (X.20, X.70) sélectionnée et déterminée, et caractéristique pour l'instruction de commande concernée,

et qu'il est prévu, dans chaque circuit de contrôle (MC1 à MCn), un emplacement de mémoire (RAM-D; RAM2) pour la réception et la retransmission de données d'informations.

2. Circuit selon la revendication 1, caractérisé par le fait que le microprocesseur (CPU) de chaque circuit de contrôle (MC1 à MCn) commande, à la cadence des vitesses de transmission de données sur les conducteurs d'acheminement (Z11 à Z1x, Zn1 à Znx) ou sur les conducteurs de prise en charge (A11 à A1x, An1 à Anx), l'interrogation de tous les conducteurs d'acheminement et la détermination d'instructions de commande pour l'émission de données par l'intermédiaire des conducteurs de prise en charge.

3. Circuit selon la revendication 2, caractérisé par le fait que pour tous les circuits de contrôle (MC1 à MCn), il est prévu un générateur de cadence commun (Tg) qui fournit des impulsions de cadence avec une fréquence d'impulsions de cadence déterminée par la plus grande vitesse de transmission de données utilisée sur les conducteurs de transmission (Z11 à Z1x, Zn1 à Znx; A11 à A1n, An1 à Anx).

# FIG 1

# FIG 2

# FIG 3